(19)

**Europäisches Patentamt**
**European Patent Office**
**Office européen des brevets**

(11) **EP 4 279 949 A1**

(12) **EUROPEAN PATENT APPLICATION**

(43) Date of publication:
**22.11.2023 Bulletin 2023/47**

(21) Application number: **22174120.0**

(22) Date of filing: **18.05.2022**

(51) International Patent Classification (IPC):
$G01S\ 7/481^{(2006.01)}$   $G01S\ 7/4911^{(2020.01)}$
$G01S\ 7/4912^{(2020.01)}$   $G01S\ 7/4915^{(2020.01)}$
$G01S\ 7/497^{(2006.01)}$   $G01S\ 7/499^{(2006.01)}$
$G01S\ 17/34^{(2020.01)}$   $G01B\ 9/02001^{(2022.01)}$
$G01B\ 9/02003^{(2022.01)}$   $G01B\ 11/02^{(2006.01)}$

(52) Cooperative Patent Classification (CPC):
**G01S 17/34; G01B 9/02003; G01B 9/02008;**
**G01B 11/026; G01S 7/4815; G01S 7/4816;**
**G01S 7/4818; G01S 7/4911; G01S 7/4915;**
**G01S 7/4917; G01S 7/497; G01S 7/499**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventors:
• **KELLER, Ursula**
  **8142 Uitikon (CH)**
• **PHILLIPS, Christopher**
  **8046 Zürich (CH)**
• **PUPEIKIS, Justinas**
  **8046 Zürich (CH)**
• **WILLENBERG, Benjamin**
  **8050 Zürich (CH)**
• **CAMENZIND, Sandro**
  **8046 Zürich (CH)**

(54) **DISTANCE MEASURING**

(57)     The laser distance ranging method comprises splitting each of the two combs (11, 12) of dual comb radiation into a signal radiation portion (21, 22) and a local oscillator radiation portion (23, 24). The signal radiation portions are combined into a combined signal radiation and directed, especially through a reference structure yielding a partial reflection, onto an object (10), the distance to which is to be measured. The signal thrown back from the object is split into a first signal portion and a second signal portion. The first signal portion (25) is superimposed with the second local oscillator (24) radiation portion to generate a first measurement signal, and the second signal portion (26) is superimposed with the first local oscillator radiation portion (23) to generate a second measurement signal. The distance to the object (10) is determined from the first and second measurement signals, and from reference signals obtained by the partial reflection, wherein the Vernier effect can be used to extend ambiguity by comparison of the first and second measurement signals.

Fig. 1

EP 4 279 949 A1

**Description**

FIELD OF THE INVENTION

The invention is in the field of laser-based distance measuring.

BACKGROUND OF THE INVENTION

Among laser-based distance ranging (Light Detection and Ranging LiDAR) devices, devices based on dual optical frequency comb technology ('dual-comb ranging') offer an inherently high precision and sampling rate and do not require any moving parts for scanning a distance.

Dual-comb ranging uses the combination of two optical frequency combs with slightly different repetition rates. One beam (corresponding to one of the combs) is directed to a target and a reference that both reflect it back at least partially, and the returning radiation is combined with the other beam (corresponding to the other one of the combs; serving as a local oscillator (LO)) for example in a beam splitter. The resulting interferometric signal is measured with a photodiode. This features, among others, the advantage that instead of a high-frequency photodetection, a detection that resolves up to half the repetition rate of the frequency comb is sufficient. However, the measurements are subject to an ambiguity range relating to the pulse repetition rate. This range is typically in the order of a few centimeters to a few meters, which is too low for many applications.

In I. Coddington et al., Nature Photonics 3, p. 351-356 (2009), it has been proposed to significantly extend the ambiguity range by switching the roles of the signal and local oscillator (LO) laser beams and by using the Vernier effect: Because of the difference in repetition rates, for a target further away than the intrinsic ambiguity range, a distance measurement using the first comb as the signal laser beam differs from a distance measurement using the second comb as the signal laser beam. This difference is an integer number of times the difference between the ambiguity ranges of the two measurement configurations.. By combining the two measurements, therefore, the integer, and hence a value for the absolute distance, can be determined.

This approach, however, features the disadvantage that two measurements to the target have to be carried out in close succession in order to exploit the Vernier effect. Therefore, the measurement will be relatively slow, and an additional switching mechanism is required to exchange the roles of the signal beam and the local oscillator. It is not robust against drifts between successive measurements, and it also prohibits the application of the system for distance measurements on moving targets.

In DE 102012001754 it has further been proposed to use an optical filter that splits one of the frequency combs in two parts in order to allow for the two measurements to be carried out simultaneously, with the roles of the two combs interchanged. However, this technique suffers from the significant disadvantage that the two measurements with interchanged combs are asymmetric. This can lead to systematic errors and an increased complexity in the post-processing of the data. Furthermore, spectral filtering is complex and expensive and sacrifices resolution by limiting bandwidth.

Ya Liu et al., "Fast distance measurement with a long ambiguity range using a free-running dual-comb fiber laser"; Frontiers in Optics /Laser Science (2020) propose to carry out two measurements with switching the roles of the signal and local oscillator laser beams according to the mentioned approach of I. Coddington et al., followed by a measurement in which the two measurements are combined in a simultaneous measurement. This approach may allow the use for moving targets but shares the other mentioned disadvantages of the approach by I. Coddington et al.

SUMMARY OF THE INVENTION

It is an object of the present invention to provide a laser ranging method and a laser ranging device overcoming disadvantages of the prior ar. It is especially an object of the invention to provide a method and device suitable for measuring also longer distances of more than 50 m, more than 100 m or even more than 1 km, without ambiguity, and without a calibration measurement being necessary before each measurement.

These and other objects are achieved by a method and device as defined in the claims.

The laser distance ranging method according to an aspect of the present invention comprises the following steps:

- Generating a dual comb radiation that comprises a first radiation portion with a train of first radiation pulses having a first pulse repetition frequency and a second radiation portion with a train of second radiation pulses having a second pulse repetition frequency, which is slightly different from the first pulse repetition frequency.
- Splitting the first radiation portion into a first signal radiation portion and a first local oscillator radiation portion.
- Splitting the second radiation portion into a second signal radiation portion and a second local oscillator radiation portion.
- Combining the first signal radiation portion (having the first pulse repetition frequency) and the second signal radiation portion (having the second pulse repetition frequency) into a combined signal radiation.
- Directing the combined signal radiation onto an object, the distance to which is to be measured. The step of directing may include directing the combined signal radiation though a reference object onto the target object.

- Receiving a signal thrown back from the object irradiated by the combined signal radiation.
- Splitting the signal into a first signal portion and a second signal portion.
- Superimposing the first signal portion with the second local oscillator radiation portion to generate a first measurement signal.
- Superimposing the second signal portion with the first local oscillator radiation portion to generate a second measurement signal.
- Determining a distance to the object from the first and second measurement signals.

In this, the superimposing of the respective signal portions with the local oscillator portions will cause interference for components having the same polarization, thus the first and second measurement signals are interference signals.

The generation of the first/second measurement signals may comprise an optical-to-electric conversion, for example by a first/second photodiode.

The superposition of the first signal portion - which will comprise at least a fraction of radiation of the first comb - with the (second comb) second local oscillator radiation portion will be ab interferometric signal having a pulsed structure with oscillations within the pulse envelope, and can be used for the distance measurement, with the well-known ambiguity. The same holds true for the superposition of the second signal portion - which will comprise at least a fraction of radiation of the second comb - with the (first comb) first local oscillator radiation portion. The determination of the distance may then comprise using the Vernier effect to extend the ambiguity range by comparing the first and second measurement results, substantially as taught in I. Coddington et al., Nature Photonics 3, p. 351-356 (2009). In contrast to the latter, the approach according to the present invention, which includes splitting both combs, allows to generate the first and second measurement results simultaneously so that the method can for example also be used to determine the distance - and/or velocity - of moving objects. Also, it works ab initio, without any special calibration measurements being necessary as would for example be the case in the approach of Ya Liu et al., "Fast distance measurement with a long ambiguity range using a free-running dual-comb fiber laser"; Frontiers in Optics/Laser Science (2020).

The dual comb radiation may be polarized.

The step of combining may be made, for example by a polarization combiner, in a manner that shares of the combined signal radiation due the first signal radiation portion have a first polarization and shares of the combined signal radiation due the second signal radiation portion have a second polarization different from the first polarization. The step of splitting the signal may then comprise separating portions of the signal having the first polarization and portions of the signal having the second polarization to yield a first signal portion (stemming from the portions of the signal that have the first polarization) and a second signal portion (stemming from the portions of the signal that have the second polarization).

This features the advantage that the first signal portion has the characteristics of the first frequency comb (i.e. it forms the first frequency comb in the frequency domain, i.e. it corresponds to a train of pulses of the first pulse repetition frequency) only, and it is superimposed with the second local oscillator radiation portion having the characteristic of the second frequency comb for generating the first measurement signal - and vice versa for the second signal portion that has the characteristics of the second frequency comb.

Thus, in these embodiments, only the signal portions that are meant to be combined for heterodyne signal processing are superimposed, so that the process is particularly efficient. Essentially all returning radiation can contribute to the 'wanted' measurement signal. Also, because the combined signal radiation portions have orthogonal polarizations, there will not be any 'unwanted' interference in the combiner. Such 'unwanted' interference would cause an interferometric signal that would be detected by the detector and thus would have to be filtered out.

Polarization combiners that produce a combined beam with orthogonal polarizations from two polarized beams - and split a combined beam with orthogonal polarizations into two distinct polarized beams when operated in the opposed direction - are known and are commercially available.

As an alternative to using a polarization combiner for combining, it is also possible to use a polarization maintaining fiber coupler or a single-mode fiber coupler or the respective equivalent for free-space or waveguide set-ups. In these alternative embodiments, the first signal portion will comprise contributions by both combs. However, upon superposition with the second local oscillator portion, the contributions of the second comb can be sorted out in that they will not contribute to the frequency comb that results, from the heterodyne detection by mixing with the local oscillator portion with slightly offset frequencies, in a much lower frequency domain (much lower compared to the radiation frequency).

The dual comb radiation may be fiber-guided, i.e., at least after its generation it may be coupled into fibers, with the first and second radiation portions guided in different fibers. Alternatively, also an implementation by free-space components or by waveguides, for example on a chip, is possible.

For the distance determination, in addition to the signal that is thrown back by the object also a reference may be considered. Such reference may result from the reflection from a structure (or "reference object") along the beam path. Especially, a partial reflection of the combined signal radiation, for example from a fiber tip and/or from a facet of a dedicated reference object (such as a transparent window), may be used to generate a train of reference pulses. Such a partial reflection will generate a reference signal that is subject to the steps of splitting into the first and second signal portions and of superimposing together with the signal that is thrown back from the object. Since it will be possible to distinguish the reference signal from the signal (being, according to the definition used in the present text, the signal thrown back by the object) based on characteristics such as the amplitude (that is well-known for the reference signal), in the post-processing this can be used to determine the distance as a distance between the reflection of the reference signal and the reflection by the structure.

In addition or as an alternative to using a reflection from a structure with a well-defined position (such as the mentioned fiber tip or face of a transparent window; also other elements along the beam path) one may also use find other ways to obtain a reference. For example, a reference could be obtained from sum frequency mixing or other non-interferometric means. Another way to obtain a reference exists if the first and second signal radiation portions do not have orthogonal polarizations, as is the case in embodiments where a device different from a polarization combiner is used for combining. In these embodiments, combining will produce an interference signal. This interference signal can be used as a reference instead of, or in addition to, the reference obtained by a (partial) reflection at a structure having a well-defined position.

In special embodiments, two partial reflections may be used to generate two reference signals to deal with the hypothetical situation in which the distance between the reflection of one of the reference signals and the reflection by the object (or to be precise: twice this distance) corresponds to an integer multiple of the cavity length of the dual comb radiation source so that reference pulses coincide with the signal pulses - so that the respective other reference signal may be used. As an alternative thereto, signal and reference pulses can also be distinguished in the post-processing even if they temporally overlap in the measurement, for example by fitting a model.

A way to obtain an additional partial reflection (in addition to obtaining one from the fiber tip) is to place a transparent, for example wedged window in the measurement path. If the thickness of such window is known, one can further use it for deducing the repetition rate and/or calibrate the electronic clock of the device.

In many embodiments, the dual comb radiation will be in the near infrared or visible range, with wavelengths that for example lay in the range of between 0.3 $\mu$m and 2 $\mu$m. The repetition rate of the dual comb may be chosen, especially by choosing the appropriate cavity length, depending on the specific needs. It may for example be between 50 MHz and 10 GHz, especially between 250 MHz and 2 GHz. As a general rule, increasing the repetition rate - by reducing the cavity length of the dual comb radiation source - enables a larger repetition rate difference without aliasing. In turn, this supports an enhanced sensitivity and measurement update rate at the cost of a reduction in the extended ambiguity range.

The pulse repetition rate difference between the two combs may be matched to the required measurement distance to the object, which is application dependent. The difference in the repetition rates $\Delta f_{rep}$ may for example be set so that using the Vernier technique one is able to resolve up to the required measurement distance. The maximum distance without ambiguity is $c/(2*\Delta f_{rep})$.

For many applications, it is ideal if the value $c/(2*\Delta f_{rep})$ exceeds the required distance but not by too much for best performance, for example not more than by a factor 2 or 3.

In embodiments, therefore, the following inequality may hold:

$$c/(2*\Delta f_{rep})/3 < d < c/(2*\Delta f_{rep});$$

where d is the distance to be measured (which in many applications is approximately known).

Another possible design criterion for the $\Delta f_{rep}$ is that it may be advantageous if $\Delta f_{rep}$ is small enough to avoid aliasing. In order for this to be fulfilled, the down-converted frequency comb (usually in the radiofrequency domain), which results from the first and second radiation portions beating, should not be broader than half the repetition frequency. This condition can be expressed as follows: $\Delta f_{rep} < f_{rep}^2/(2\Delta v^2)$, where $\Delta v$ is the optical bandwidth of the first and second frequency combs.

In special embodiments, an additional dual comb radiation that comprises a third radiation portion with train of third radiation pulses having a third pulse repetition frequency and a fourth radiation portion with a train of fourth radiation pulses having a fourth pulse repetition frequency different from the third pulse repetition frequency, can be used. The third and fourth repetition frequencies can - but need not - be the same as the first and second repetition frequencies.

In this, the third and fourth radiation portions may be in a wavelength region different from a wavelength region of the first and second radiation portions. For example, the second dual comb may be at the double frequency compared to the first dual comb, and the second dual comb may be generated from the first dual comb using a nonlinear optical effect. Alternatively, the second dual comb may be generated by a separate source. In these embodiments, the additional dual comb radiation may be used to perform a same measurement as with the dual comb radiation that has the first and second radiation portions. This may be done so as to correct for refractive index changes along the measurement path, using the frequency dependency of the refractive index.

In addition to concerning a method, the present invention also concerns a laser distance ranging device. The device is especially suited to carry out the method. Properties of the method described or claimed in the present text are optional properties of the device, too, and vice versa.

Accordingly, the laser distance ranging device for carrying out the method comprises:

- a dual comb radiation source;
- a first radiation splitter and a second radiation splitter
- a radiation combiner;
- a radiation incoupling and outcoupling structure; and
- a first and a second detector.

In this, one of the output ports of the dual comb radiation source is connected, for example via an optical isolator to prevent feedback, to an input port of the first radiation splitter. The other one of the output ports of the dual comb radiation source is connected, again for example via an optical isolator, to an input port of the second radiation splitter. One of the output ports of each radiation splitter is connected to an input port of the radiation combiner, whereas the other output ports of the radiation splitters are connected to each other. A remaining input port of each of the beam splitters (a port that corresponds to the input that is not connected to the dual comb radiation source) is connected to the first and second detectors, respectively.

If two ports are described as being "connected", this means, in the present text, especially that the ports communicate so that radiation coupled out of one port gets to the other ones of the ports. A possible connection can be a connection by a fiber or an on-chip waveguide, but also ports coupled via free space are considered "connected" in the present text.

The dual comb radiation source generates two frequency combs with slightly offset frequencies, i.e., two radiation portions, each comprising a train of radiation pulses, the two trains having slightly different pulse repetition frequencies.

The first radiation splitter, by being connected to one output port of the radiation source, splits the first radiation portion into a first signal radiation portion and a first local oscillator radiation portion; and in analogy the second radiation splitter, by being connected to the other output port of the radiation source, splits the second radiation portion into a second signal radiation portion and a second local oscillator radiation portion.

The radiation combiner, by being connected to an output port of each radiation splitter (the output ports for the signal radiation portions) is arranged to combine the first and second signal radiation portions into a combined signal radiation. This signal radiation is coupled, by the incoupling and outcoupling structure, out of the device. The incoupling and outcoupling structure also receives the signal thrown back from the object and directs it to the output port of the combiner.

By the mentioned connection between output ports of the radiation splitters (the output ports for the local oscillator radiation portions), the first radiation splitter superimposes the first signal portion with the second local oscillator radiation portion to generate a first measurement signal, and the second radiation splitter superimposes the second signal portion with the first local oscillator radiation portion to generate a second measurement signal. The first/second measurement signal gets into the respective input ports of the radiation splitters. While the parts that are coupled into the input ports connected to the frequency dual comb radiation source may be prevented from getting back into the radiation source by optional optical isolators, the parts that reach the respective other input port reaches the first/second detector, so that the first detector, by its connection to the remaining input port of the first beam splitter, is arranged to receive the first measurement signal whereas the second detector receives the second measurement signal.

The radiation splitters may for example by a polarization maintaining fiber beam splitters, especially 50:50 beam splitters or beam splitters with different splitting ratios.

The radiation combiner may be a polarization combiner.

The detectors may be photodiodes.

The device may further include a data acquisition system to process the data. This data acquisition system is a post-processing unit that is equipped to analyze the first and second measurement signals. The post-processing unit may comprise at least one analog-to-digital converter as well as a software for determining, from the digitized signal, the distance in the manner described in the present text.

The device may optionally comprise further units such as a further detector, for example photodiode, and frequency counter to determine the pulse repetition rate of the radiation source. This may be used for scaling the distance by means of the cavity length (that can be determined from the pulse repetition rate) of the radiation source.

BRIEF DESCRIPTION OF THE DRAWINGS

Hereinafter, embodiments of the present invention are described referring to drawings. In the drawings, same reference numbers denote same or analogous elements. The drawings are schematical and not to scale. They show:

Fig. 1    a laser ranging device;

Fig. 2    a variant of the laser ranging device of Fig. 1;

Fig. 3    an embodiment of a laser ranging device equipped to measure the distance simultaneously in two different wavelengths ranges;

Fig. 4    an embodiment of a laser ranging device with radiation sources emitting in two different wavelength ranges; and

Fig. 5    a detail of an even further laser ranging device, being a further variant of the laser ranging device of Fig. 1.

DESCRIPTION OF THE PREFERRED EMBODIMENTS

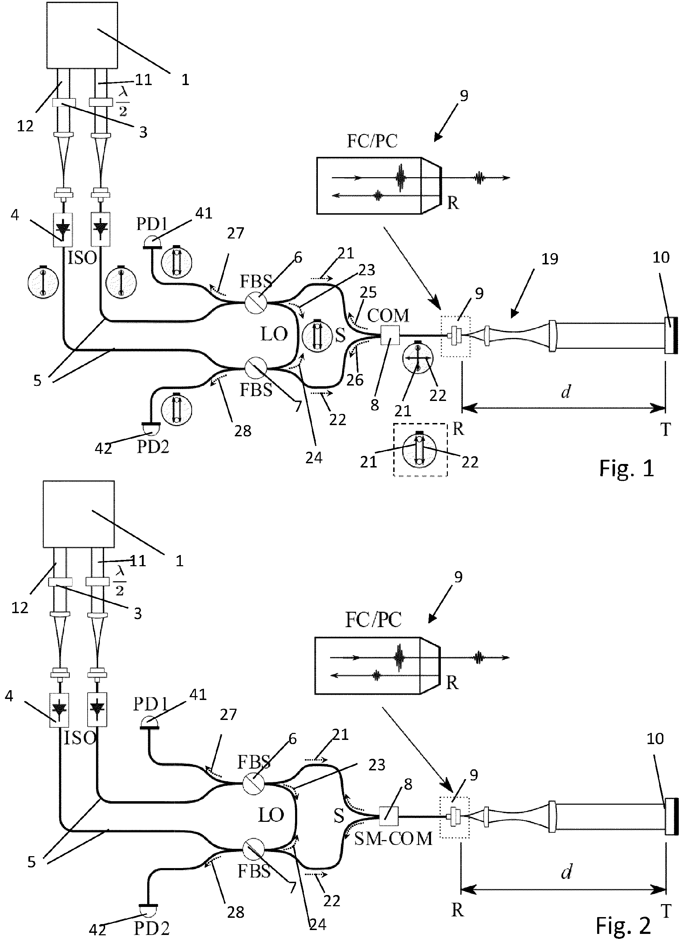

The device shown in **Figure 1** comprises a dual-comb (laser) radiation source 1 emitting two radiation portions 11, 12, each being a train of laser pulses, with the pulse repetition frequencies being slightly offset between the two trains. Dual comb radiation sources of this kind are known from literature, for example from WO 2016/049787 or from the European patent application 21 190 032.9. Also dual comb laser sources that comprise two lasers that are synchronized in a suitable manner are known and can be used for the present invention.

The two radiation portions 11, 12 are assumed to be polarized when they are emitted by the dual comb laser source 1; in principle, it would also be possible to add a polarizing element outside of the laser source if the emitted dual comb radiation was not sufficiently polarized. Also, the polarizations of the two radiation portions 11, 12 may be identical. In embodiments, the polarizations could also be different, for example orthogonal to each other.

The radiation portions 11, 12 emitted by the dual comb laser source 1 are coupled into polarization-maintaining fibers 5. In the depicted embodiment, the polarization is oriented by $\lambda/2$ waveplates 3 through which the radiation is guided before being coupled into the fibers 5; the polarization in the fibers is along the slow-axis of the fibers. Optical isolators (ISO) 4 prevent feedback from the fibers back into the dual comb laser source 1.

Each one of the radiation portions is splitted by a 50:50 polarization maintaining fiber beam splitter (FBS) 6, 7 into a signal radiation portion (S) 21, 22 and a local oscillator radiation portion (LO) 23, 24. The signal radiation portions (S) 21, 22 are then combined together with a combiner (COM) 8 being a polarization combiner, implemented with polarization maintaining fibers. The first signal radiation portion 21 (that together with the first local oscillator radiation portion 23 results from splitting the first radiation portion 11) and the second signal radiation portion 22 (that together with the second local oscillator radiation portion 24 results from splitting the second radiation portion 12) after being combined have orthogonal polarizations. The combined signal radiation that consists of the first and second signal radiation portions 21, 22 is used to sample the distance d between the end facet R of the fiber tip 9 and the object (target T) 10.

Fig. 1 also illustrates a collimation optics 19 between the fiber tip 9 and the object 10. The fiber tip 9, if present together with the collimation optics 19, serves as the radiation incoupling and outcoupling structure for the emitted and received radiation.

In this, the end facet R of the fiber tip 9 serves as a reference plane in that a portion of the combined signal radiation is reflected by it (see the enlarged panel FC/PC; "FC/PC" indicating that a state of the art fiber connector (FC) may optionally be used as the fiber tip 9).

In the figures, the collimation optics 19 is illustrated as a lens pair after the fiber tip 9. In principle, other arrangements could do the same job, including a single lens or a combination of three lenses, with a first lens to collimate the beam directly after the fiber tip 9, and then a pair of lenses to expand the beam at a later stage to the desired size. Such optional expansion of the beam reduces diffraction if the beam travels over long distances. This is beneficial if the fiber end facet R and the object 10 are separated by a long distance.

The combined signal radiation consisting of the first and second radiation portions 21,22 (with the portion that is reflected to yield the end signal deducted) is directed onto the object 10, which here is illustrated to be a mirror serving as a target (T). The first and second signal radiation portions 21, 22 reach the object with orthogonal polarization states. The object upon which the combined signal radiation impinges throws back a signal, which signal is received via the fiber tip 9 and coupled into the fiber. The signal is again split according to their polarization states by the (polarization) combiner 8, which also aligns the polarization again with the slow axis of the fiber , so that a first signal portion 25 (that comprises the part of the signal that has the first polarization) and a second signal portion 26 (that comprises the part of the signal that has the second polarization) results.

These first and second signal portions 25, 26 are superimposed (combined interferometrically) with the local oscillator radiation portions 24; 23 of the respective other frequency comb in that the gates for the local oscillator radiation portions of the fiber beam splitters 6, 7 are connected with each other, as illustrated in Fig. 1. The resulting interference signals (first and second measurement signals 27, 28) are then fed to a first photodiode 41 and a second photodiode 42, respectively, for optical-to-electrical conversion and are then subjected, for deviating the distance, to signal evaluation using techniques that are per se known from optical heterodyne detection.

The evaluation further comprises the step of comparing the results of the distance determinations by the two photodiodes to remove ambiguity using the Vernier effect, as described in I. Coddington et al., Nature Photonics 3, p. 351-356 (2009).

The deducting of a distance after superposition with the corresponding local oscillator radiation portions is also carried out for the reflected combined signal portion (reflection by the fiber tip 9 in the depicted embodiment), which serves as a reference signal. The signal and the reference signal can readily be distinguished because the intensity of the reference signal is well-known and different from the intensity of the signal.

In a first alternative embodiment (second embodiment), the combiner 8 is not a polarization combiner but a polarization maintaining fiber coupler. In this alternative embodiment, both combs, i.e. both signal radiation portions 21, 22 would be launched with the same polarization towards the target. This alternative is illustrated by the inset in the dashed box towards the bottom of Fig. 1.

In this second embodiment, the light reflected from the target can thus no longer be separated since the signal radiation portions 21, 22 share the same polarization. Consequently, both signal combs propagate towards both photodetectors 41, 42. I.e., the signal is split into the two signal portions 25, 26 with both signal portions being essentially identical. However, the comb with the same repetition rate as the local oscillator (LO) will not be sampled by the local oscillator (since the pulses will not move relative to each other), while the comb with a different repetition rate will be scanned by the local oscillator equivalently to the first embodiment. Thus, upon superimposing the first signal portion 25 with the second local oscillator radiation portion 24 in the first polarization maintaining fiber beam splitter 6, only the parts of the signal that stem from the first radiation portion will add to the sampled signal at the low (heterodyne) frequency. Similarly, upon superimposing the second signal portion 26 with the first local oscillator radiation portion 23 in the second polarization maintaining fiber beam splitter 7, only the parts of the signal that stem from the second radiation portion will add to the sampled signal.

Thus, even without the polarization selectivity of the signal splitting, there will be a similar result compared to the first embodiment, except that there may be additional parasitic signals occurring due to combining the two combs interferometrically at the combiner 8, which could lead to reduced performance at certain distances. Nevertheless, for some distances and set-ups this less complex embodiment may be sufficient.

An even further alternative (third embodiment) is illustrated in **Figure 2.** Compared to the embodiments of Fig. 1, the combiner 8 is replaced by a single-mode fiber coupler. For this configuration, the remaining components do not need to be polarization maintaining. This setup works for the same reason as the second embodiment with a polarization-maintaining fiber coupler.

In the third embodiment, the polarization of the light may rotate significantly while propagating through the setup, due to the lack of polarization maintaining fiber. This could be a severe issue to the measurements if, for example, the polarization state of the LO path was rotated by exactly 90 degrees relative to the signal path, since then there would be no interference. To prevent this issue when using non-PM fibers, an additional light pre-conditioning step could be included in the setup. An example of this is the addition of a birefringent crystal between the optical isolators 4 and the fibers 5 in Fig. 2. If such a crystal, oriented with its polarization axes at 45deg relative to the output polarization of the light after the isolator, was inserted into the path of one of the two beams, then this beam would be split into two orthogonally polarized and delayed pulse components. Thus, for each polarization state within the subsequent fiber apparatus, there would exist a finite projection onto one or the other of these pulse components, thereby enabling interferometric superposition Alternatively, sufficient performance might be achieved by putting the fiber setup onto a temperature controlled base plate.

It has already been proposed, for example by J. Owens, Bulletin géodésique 89, 277-291 (1968), for correcting for refractive index changes along the measurement path, to perform the same measurements with light at different wavelengths. This may be used in context of the present invention, too.

According to a first possibility to do so, , the first wavelength is given by the wavelength of the laser. To generate light in a second wavelength region, one could use for example second harmonic generation (SHG) of the laser output, which doubles the frequency of the incident light. The idea would in this embodiment be to:

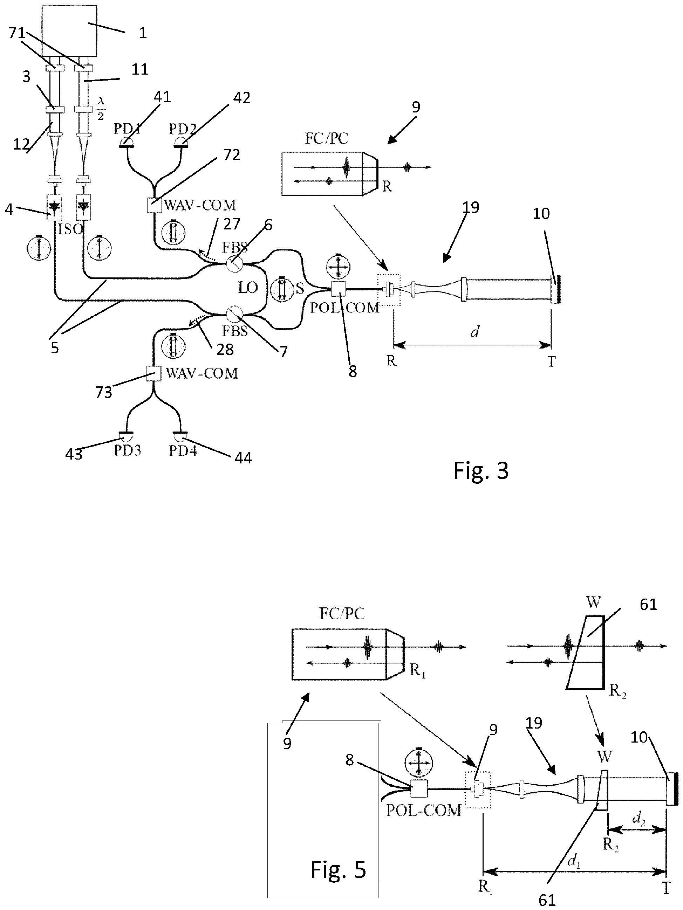

- First, generate light at a second wavelength (e.g. with SHG). **Figure 3,** which is based on the embodiment of Fig. 1 illustrates an SHG device 71 at each output port of the radiation source 1.

- To measure the distance simultaneously at both wavelength regions, one would couple the light at both wavelengths into a measurement system that is suitable for both wavelength regions, as shown in Fig. 3

- In this embodiment, one would still need to separate the light at the two wavelength regions prior to the detection. To this end, for example, the first and second measurement signals 27, 28 may each be split according to their two distinct wavelength regions, and the resulting split measurement signals would each be detected by a separate photodetector, so that in total two pairs of photodetectors 41, 42; 43, 44 would be used. Fig. 3 illustrates wavelength combiners 72, 73 for the purpose of splitting the measurement signals 27, 28.

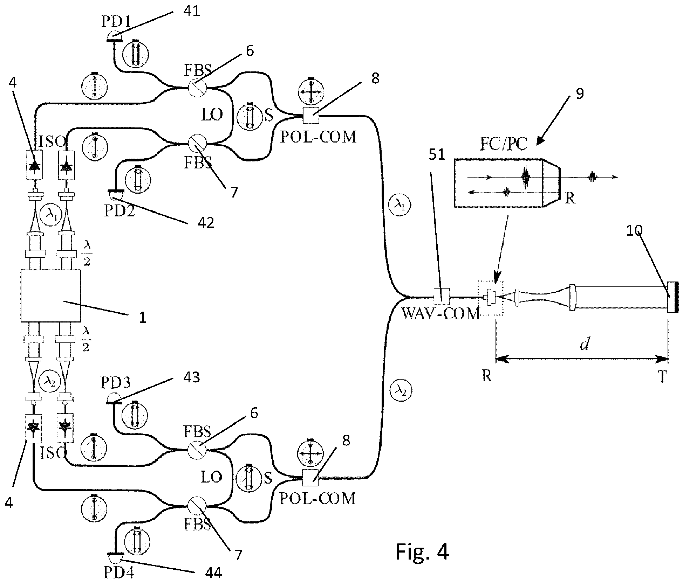

The embodiment of **Figure 4**, which is also based on the concept of Fig. 1, in contrast, relies on using a separate measurement system for each wavelength region. To implement the compensation of the refractive index, also the embodiment of Fig. 4 uses two different wavelengths $\lambda_1$ and $\lambda_2$. Depending on the sources used, $\lambda_1$ and $\lambda_2$ may be chosen independently of each other. For each of the wavelength, a set-up of the kind described referring to Fig. 1 (with the combiner 8 being a polarization combiner POL-COM) is provided, depicted in the upper and lower half of Fig. 4, respectively. The combined signal radiations of the two wavelengths $\lambda_1$ and $\lambda_2$ are combined in a wavelength combiner (WAV-COM) 51 so that a wavelength combined signal radiation is sent to the target 10. The wavelength combiner could be for example a dichroic mirror (in free-space), a wavelength division multiplexer (WDM, in fiber), or a wavelength combiner realized with waveguides (on a chip).

The wavelength combined signal radiation contains four frequency combs, a dual comb at the first wavelength $\lambda_1$, and a dual comb at the second wavelength $\lambda_2$. The thrown back signal is first wavelength split in the wavelength combiner 51 into two branches, and each branch is subject to the steps described referring to Fig. 1.

The signal is then detected on four separate photodiodes (PD1 and PD2 for the first wavelength $\lambda_1$, PD3 and PD4 for the second wavelength $\lambda_2$).

**Figure 5** yet sketches a way to deal with a situation in which the signal pulses thrown back by the object (target 10) and the reference pulses arrive at the same time on the photodetectors, i.e., if the (optical) distance to be measured is an integer multiple of the (optical) laser cavity length (which latter sets the pulse-to-pulse distance). Fig. 5 shows, for the embodiment of Fig. 1 the polarization combiner POL-COM 8 together with the fiber tip 9 and the object 10.

In accordance with Fig. 5, an additional reference pulse is generated by placing a wedged window 61 in the measurement path. One reference pulse would thus originate from the reflection at the FC/PC fiber tip (Reference Ri in Fig. 5), and a second reference pulse would originate from the wedged window W 61 (Reference $R_2$ in Fig. 5). The reflectivity of the wedged window 61 should ideally be slightly different from the reflectivity of the FC/PC fiber tip (which generates the first reference pulse), so that the two reference pulses are distinguishable. Also, the wedged window 61 will be placed so that the distance between the reflections $R_1$ and $R_2$ will be different from an integer multiple of the laser cavity length (for example, it may be much smaller than the latter).

By having two reference pulses, one can ensure that it is always possible to reference the signal pulse to at least one of them, i.e., it is always possible to determine at least $d_1$ or $d_2$ (see Fig. 5). Since the distance between the two reference planes, i.e., $d_1$-$d_1$, is known from a measurement with a blocked signal path, we can always find the distance between the first reference plane Ri and the target T. For most target distances, where there is no overlap between the target pulse and the "main" reference pulse, the presence of a second signal would add to the achievable signal to noise ratio. So, both pulse components are useful for the measurement.

When working with light in two different wavelength regions (as for example described referring to Fig. 4), a wedged window leads to a slightly different deflection of the beams at different wavelengths. A suitable position for the wedge is directly after the collimation optics 19 (as illustrated in Fig. 5) where the angle offset introduced by different refractive indices of light at different wavelengths is small compared to the divergence angle. This ensures that after the collimation optics, the beams at different wavelengths propagate more collinear (since the small angle offset gets scaled down by the beam size magnification factor).

As an alternative to the wedged window, one can also use an unwedged window to create the reference pulses. This becomes particularly useful when working with light in two different wavelength regions, since this allows to keep the beams at different wavelengths more parallel. If an unwedged window is used, both facets will each yield a reflection, so that a third reference pulse is generated and can be used. Alternatively, one of the reflections can be ignored. In both cases, an antireflection (AR) coating can be used on one side of the unwedged window to suppress the to-be ignored reflections or to adjust the strength of the reference pulses. Especially, if both reflections are used, an AR coating can diminish the reflectivity from one surface and thereby reduce the pulse energy of one of the reference pulses so that the two kinds of reference pulses can be distinguished in the postprocessing stage.

The use of a wedged or unwedged transparent window in the measurement path for generating one or two reference pulses is also an option in embodiments in which no reference pulse originates from a reflection at the fiber tip 9 or in which such reflection is not exploited.

As an alternative to using a transparent window for generating a further reflection, the signal and reference pulses can in principle also be distinguished in the post-processing, even if they temporally overlap in the measurement. If a signal and a reference pulse overlap, the measurement result will be the coherent sum of the two corresponding interferograms (one corresponding to the reference pulse and one to the signal pulse). One can then distinguish the two signals by fitting a model of the coherent sum of two interferograms to the measured signal. With the model, it is possible to reconstruct the isolated interferograms corresponding to the signal pulse and the reference pulse, respectively.

An unwedged window of the above-described kind that is used to generate two reference pulses could also serve as a distance reference. This would require it to be made out of a sufficiently stable material such as ultra-low thermal expansion glass (ULE manufactured by Corning). By having an unwedged window made out of this material and measuring its thickness very precisely, one would have two reference planes with well-known separation $\Delta d$. These surfaces would generate two reference pulses with a known and well-defined optical delay $\Delta \tau$. By measuring this delay with the device according to the invention, it is possible to either (a) calibrate the repetition rate $f_{rep}$ of the laser very precisely or (b) correct for uncertainties in the electronic clock. These calibrations could proceed as follows:

(a) The idea of how the repetition rate $f_{rep}$ of the laser can be calibrated is that the repetition rate difference $\Delta f_{rep}$ between the two frequency combs is known from the delay between two reference pulses from one single reference plane. This information, together with the separation between the two reference planes and the delay between the corresponding reference pulses is enough to find $f_{rep}$ by using the following equation:

$$f_{rep} = \frac{1}{2} v_{group} \Delta \tau \frac{\Delta f_{rep}}{\Delta d}$$

$v_{group}$: group velocity of the light

$\Delta \tau$ : delay between the two reference pulses, as measured with the device according to the invention

$\Delta d$ : distance between the two reference planes

$f_{rep}$ : repetition rate of the laser

$\Delta f_{rep}$ : repetition rate difference between the two frequency combs

(b) The dual-comb data provides a measurement of $\Delta f_{rep}$ according to the clock used on the data acquisition device. By also measuring the laser repetition rate with a separate photodiode and quantizing the signal with a data acquisition system sharing the same clock, one can obtain a very precise value of the ratio $\Delta f_{rep}/f_{rep}$, independent of uncertainties in the electronic clock. The LiDAR measurement using the device according to the present invention would yield the delay between the two pulses in the electronic domain: $\Delta T = \Delta \tau * f_{rep}/\Delta f_{rep}$. Since $\Delta \tau$ is precisely known from a prior measurement (e.g. done with an independent, ultra-high precision laboratory source) and the ratio $f_{rep}/\Delta f_{rep}$ is also known very precisely (independent of uncertainties in the electronic clock), one can use the measured $\Delta T$ to correct for uncertainties in the electronic clock.

In addition or as an alternative to using an unwedged window in the measurement path, one can also use a reference cavity in the measurement path to generate multiple reference pulses.

In the above-described embodiments, the object 10 the distance of which to the reference reflection is to be measured, was assumed to comprise a flat mirror as a target. This is not necessary. Instead, also a diffuse reflection can be used, for example directly from the surface of the object. As an even further alternative, a retroreflector may be used, for example a corner-cube style retroreflector. Using a retroreflector is more practical than a flat mirror because the system is less sensitive to alignment of the target.

In the above-described embodiments, the device was assumed to be implemented by fiber-optic components. However, it would also be possible to use, at least in part, another platform. For example, it would be possible to use free-space components meaning that the fiber beam splitters and/or the combiner are replaced by corresponding free-space components and the radiation travels in free space between the beam splitters and the combiner and/or in other parts of the device.

As an even further alternative, the device could also be implemented, at least in part, by waveguides, for example by using integrated photonics on a chip.

**Claims**

1. A laser distance ranging method comprising the steps of:

   ◦ generating a dual comb radiation that comprises a first radiation portion (11) with train of first radiation pulses having a first pulse repetition frequency and a second radiation portion (12) with a train of second radiation pulses having a second pulse repetition frequency different from the first pulse repetition frequency;
   ◦ splitting the first radiation portion (11) into a first signal radiation portion (21) and a first local oscillator radiation portion (23);
   ◦ splitting the second radiation portion (12) into a second signal radiation portion (22) and a second local oscillator radiation portion (24);
   ◦ combining the first signal radiation portion (21) and the second signal radiation portion (22) into a combined signal radiation;
   ◦ directing the combined signal radiation onto an object (10);
   ◦ receiving a signal thrown back from the object (10) irradiated by the combined signal radiation;
   ◦ splitting the signal into a first signal portion (25) and a second signal portion (26);
   ◦ superimposing the first signal portion (25) with the second local oscillator radiation portion (24) to generate a first measurement signal (27);
   ◦ superimposing the second signal portion (26) with the first local oscillator radiation portion (23) to generate a second measurement signal (28); and
   ◦ deducting a distance to the object (10) from the first and second measurement signals.

2. The method of claim 1, wherein after the step of combining, shares of the combined signal radiation due the first signal radiation portion (11) have a first polarization and shares of the combined signal radiation due the second signal radiation portion (12) have a second polarization different from the first polarization; and wherein the step of splitting the signal comprises separating portions of the signal having the first polarization and portions of the signal having the second polarization to yield the first signal portion (25) and the second signal portion (26).

3. The method of claim 2, wherein for the step of combining and for the step of splitting a polarization combiner is used.

4. The method of claim 1, wherein for the step of combining and for the step of splitting, a polarization maintaining fiber coupler or a single-mode fiber coupler is used.

5. The method according to any one of the previous claims, further comprising using a partial reflection of the combined signal radiation to generate a train of reference pulses, and carrying out the steps of splitting and of superimposing with the second local oscillator radiation portion (24) and with the first local oscillator radiation portion (23), respectively, also for the train of reference pulses, to generate a first and second reference signal, and using the first and second reference signals in the step of deducting the distance to the object (10), the distance being a distance between the partial reflection and the object.

6. The method according to any one of the previous claims, and comprising the further step of generating an additional dual comb radiation that comprises a third radiation portion with train of third radiation pulses having a third pulse repetition frequency and a fourth radiation portion with a train of fourth radiation pulses having a fourth pulse repetition frequency different from the third pulse repetition frequency, the third and fourth radiation portions being in a wavelength region different from a wavelength region of the first and second radiation portions, and using the additional dual comb radiation to perform a same measurement as with the dual comb radiation that has the first and second radiation portions, so as to correct for refractive index changes along a measurement path.

7. The method according to any one of the previous claims, wherein the step of deducting the distance comprises comparing the first and second measurement signals and using the Vernier effect to reduce ambiguity.

8. The method according to any one of the previous claims, where a difference between the first and second repetition rates is $\Delta f_{rep}$, and wherein for the distance d to the object (10), the following inequality holds: $c/(2*\Delta f_{rep})/3 < d < c/(2*\Delta f_{rep})$

9. A laser distance ranging device, comprising

   ○ a dual comb radiation source (1) that produces a first radiation portion (11) with train of first radiation pulses having a first pulse repetition frequency and a second radiation portion (12) with a train of second radiation pulses having a second pulse repetition frequency different from the first pulse repetition frequency;
   ○ a first radiation splitter (6) arranged to split the first radiation portion (11) into a first signal radiation portion (21) and a first local oscillator radiation portion (23);
   ○ a second radiation splitter (7) arranged to split the second radiation portion (12) into a second signal radiation portion (22) and a second local oscillator radiation portion (24);
   ○ a radiation combiner (8) arranged to combine the first signal radiation portion (21) and the second signal radiation portion (22) into a combined signal radiation;
   ○ a radiation incoupling and outcoupling structure arranged to couple the combined signal radiation out of the device and to receive a signal thrown back from the object (10) irradiated by the combined signal radiation and to direct it to the combiner (8);
   ○ wherein an output port of the first radiation splitter (6) for the first local oscillator radiation portion (23) communicates with an output port of the second radiation splitter (7) for the second local oscillator radiation portion (24);

   ▪ whereby the first radiation splitter (6) superimposes the first signal portion (25) with the second local oscillator radiation portion (24) to generate a first measurement signal;
   ▪ and whereby the second radiation splitter (7) superimposes the second signal portion (26) with the first local oscillator radiation portion (23) to generate a second measurement signal;

   ○ a first detector (41) arranged to receive the first measurement signal, and a second detector (42) arranged to receive the second measurement signal;
   ○ wherein the device is equipped to derive a distance to the object (10) from the first and second measurement signals.

10. The laser distance ranging device according to claim 9, comprising an arrangement of optical fibers, wherein the first and second radiation splitters (6, 7) as well as the combiner (8) are fiber-optic components, and wherein the arrangement of optical fibers comprises connections between the first and second radiation splitters and the combiner as well as a connection between the first and second radiation splitters (6, 7).

11. The laser distance ranging device according to claim 9, being implemented by free-space components and/or by waveguides.

12. The laser distance ranging device according to any one of claims 9-11, comprising a partially reflecting outcoupling face that reflects a portion of the combined signal radiation back to the combiner.

**EP 4 279 949 A1**

**13.** The laser distance ranging device according to any one of claims 9-12, further comprising a transparent, for example wedged, window placed in a measurement path.

**14.** The laser distance ranging device according to any one of claims 9-13, wherein the first and second detector (41, 42) each comprise a photodiode.

Fig. 1

Fig. 2

Fig. 3

Fig. 5

Fig. 4

# EP 4 279 949 A1

Europäisches Patentamt

European Patent Office

Office européen des brevets

# EUROPEAN SEARCH REPORT

**Application Number**

EP 22 17 4120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NURNBERG JACOB ET AL: "Absolute laser ranging with sub- m resolution from a free-running dual-comb Yb:CaF2 laser", 2021 CONFERENCE ON LASERS AND ELECTRO-OPTICS (CLEO), OSA, 9 May 2021 (2021-05-09), pages 1-2, XP034001729, DOI: 10.1364/CLEO_SI.2021.STH2E.2 [retrieved on 2021-10-13] * the whole document * ----- | 1-14 | INV. G01S7/481 G01S7/4911 G01S7/4912 G01S7/4915 G01S7/497 G01S7/499 G01S17/34 G01B9/02001 G01B9/02003 G01B11/02 |
| X | XU XINYANG ET AL: "Underwater dynamic distance measurement using a cross-sampling dual-comb", OPTICS COMMUNICATIONS, ELSEVIER, AMSTERDAM, NL, vol. 517, 16 April 2022 (2022-04-16), XP087054017, ISSN: 0030-4018, DOI: 10.1016/J.OPTCOM.2022.128319 [retrieved on 2022-04-16] * abstract; figures 1, 2 * * section 2 * * section 3 * ----- | 1,6,8 | TECHNICAL FIELDS SEARCHED (IPC) G01S G01B |

The present search report has been drawn up for all claims

| Place of search | Date of completion of the search | Examiner |
|---|---|---|
| Munich | 14 October 2022 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102012001754
- WO 2016049787 A
- EP 21190032 A

**Non-patent literature cited in the description**

- **I. CODDINGTON et al.** *Nature Photonics,* 2009, vol. 3, 351-356
- **YA LIU et al.** Fast distance measurement with a long ambiguity range using a free-running dual-comb fiber laser. *Frontiers in Optics /Laser Science,* 2020
- **YA LIU et al.** Fast distance measurement with a long ambiguity range using a free-running dual-comb fiber laser. *Frontiers in Optics/Laser Science,* 2020
- **J. OWENS.** *Bulletin géodésique,* 1968, vol. 89, 277-291